# EUROPEAN PATENT APPLICATION

(11) **EP 4 596 408 A1**
(43) Date of publication of application: **06.08.2025**
(21) Application number: 25154768.3
(22) Date of filing: 29.01.2025
(51) Int. Cl.: B64D 11/06

(54) **ECONOMICAL SOLUTION FOR INFLIGHT MEDICAL EMERGENCIES AND SLEEPING NEEDS**

(30) Priority: 30.01.2024 IN 202411006025; 30.10.2024 US 202418931894
(71) Applicant: B/E Aerospace, Inc., Winston-Salem, NC 27105 (US)
(72) Inventor: KANDUKURI, Ravindra Ramulu, 500009 Secunderabad (IN); PRATHIPATI, Krishna Chaitanya, 5000050 Hyderbad (IN); BAWASKAR, Ganesh Pralhad, 501401 Hyderabad (IN)
(74) Representative: Dehns

(57) **Abstract**

A system for supporting a passenger to lie flat between two rows of passenger seats is disclosed. The system includes a bed (104) configured to support a passenger between a fore passenger seat (204) and an aft passenger seat (212). The bed includes a diaphragm (112) that includes a fore connector (116) configured to couple to a fore coupler (304) of the fore passenger seat, and an aft connector (120) configured to couple to an aft coupler (308) of the aft passenger seat. The bed further includes a mattress (108) coupled to the diaphragm.

## Description

### CROSS-REFERENCE TO RELATED APPLICATION

The present application claims the benefit of India Provisional Application No. 202411006025, filed January 30, 2024, and of US application 18/931,894 filed 30 October 2024.

### BACKGROUND

In an aircraft, medical emergencies can occur during flight where there is a need for passengers to lay flat during or after medical treatment. However, space for a passenger to lie down is limited, and most passenger seats, particularly economy seats, are unable to recline to a flat position. Because of this, passengers having a medical emergency are often made to lay flat in an aircraft aisle, which blocks the movement of passengers on the aircraft. Therefore, there is a need for a system and method that enables a passenger to lie flat during a medical emergency without resorting to lying flat in the aircraft aisle.

### SUMMARY

In some aspects, the techniques described herein relate to a system including: a bed configured to support a passenger between a fore passenger seat and an aft passenger seat including: a diaphragm including: a fore connector configured to couple to a fore coupler of the fore passenger seat; and an aft connector configured to couple to an aft coupler of the aft passenger seat; and a mattress coupled to the diaphragm.

In embodiments, the techniques described herein relate to a system, further including a seat belt junction configured to couple to two or more seat belts and configured to secure the passenger to the bed.

In embodiments, the techniques described herein relate to a system, further including a seat belt configured to couple to the seat belt junction and the fore passenger seat.

In embodiments, the techniques described herein relate to a system, wherein the mattress is an air mattress.

In embodiments, the techniques described herein relate to a system, further including a pouch configured to store the air mattress when the air mattress is uninflated.

In embodiments, the techniques described herein relate to a system, wherein the pouch is coupled to the fore passenger seat or the aft passenger seat, wherein at least one of the diaphragm or mattress is coupled to the pouch.

In embodiments, the techniques described herein relate to a system, wherein the aft connector includes a ring, wherein the aft coupler includes a hook.

In embodiments, the techniques described herein relate to a system, wherein the fore connector includes a ring, wherein the fore coupler includes a hook.

In embodiments, the techniques described herein relate to a system, wherein the fore connector includes a hook.

In embodiments, the techniques described herein relate to a system, wherein the aft connector includes a hook

In embodiments, the techniques described herein relate to a system further including the fore coupler and the aft coupler.

In embodiments, the techniques described herein relate to a system, wherein the fore coupler is configured to attach to a spreader.

In embodiments, the techniques described herein relate to a system, wherein a bed extends across a bed space between a row of at least three fore passenger seats and at least a row of seat pans of at least three aft passenger seats.

In embodiments, the techniques described herein relate to a system, wherein a top side of the mattress is substantially a same height as a top side of a seat pan of the aft passenger seat.

In embodiments, the techniques described herein relate to a system, further including an inflation device.

In embodiments, the techniques described herein relate to a system, wherein at least one of the fore connector or the aft connector further includes an adjustable strap.

In embodiments, the techniques described herein relate to a system, further including the aft passenger seat and the fore passenger seat.

In embodiments, the techniques described herein relate to a system, further including a hook-and-loop fastener configured to couple the diaphragm to the mattress.

In another aspect, the techniques described herein relate to a method for preparing a bed in an aircraft including: removing a diaphragm and mattress from a pouch; attaching a fore connector of the diaphragm to a fore coupler on a fore passenger seat; attaching an aft connector of the diaphragm to an aft coupler on an aft passenger seat; and inflating the mattress.

In embodiments, the techniques described herein relate to a method, further including, before step of inflating the mattress, unfolding the mattress.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present invention are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a perspective view of a bed.
FIG. 2 illustrates a perspective view of a bed positioned between two rows of passenger seats.
FIG. 3 illustrates a perspective view of a bed with fore couplers and aft couplers.
FIG. 4 illustrates a perspective view of a bed positioned between two rows of passenger seat frames.
FIG. 5 illustrates a perspective view of a row of passenger seat frames.
FIG. 6 illustrates a side view of a bed positioned between fore and aft passenger seats, and an inset illustrating the coupling between the bed and the aft passenger seat.
FIG. 7 illustrates a perspective view of a bed positioned between fore and aft passenger seats, and an inset illustrating the coupling between the bed and the fore passenger seat.
FIG. 8 illustrates a perspective view fore and aft passenger seats, with a fore coupler attached to the fore passenger seat frame, and an inset illustrating the fore coupler attached to the fore passenger seat frame.
FIG. 9 illustrates a perspective view of two pouches attached to the back of two passenger seat frames.
FIG. 10 is a flow diagram for a method for preparing a bed between two rows of passenger seats.
FIG. 11 illustrates a method for preparing a bed between two rows of passenger seats.
FIG. 12 illustrates a top view of a bed placed between two rows of passenger seats, along with seat belts positioned over the bed.
FIG. 13 illustrates a seat belt junction coupled to a set of seat belts.
FIG. 14 illustrates a side view of a bed placed between two rows of passenger seats, along with seat belts positioned over the bed.
FIG. 15 illustrates a fore connector along with assembled and unassembled aft couplers.

### DETAILED DESCRIPTION

Before explaining one or more embodiments of the invention in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the invention. However, it will be apparent to one of ordinary skill in the art having the benefit of the instant invention that the embodiments disclosed herein may be practiced without some of these specific details. In other instances, well-known features may not be described in detail to avoid unnecessarily complicating the instant invention.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the invention in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant invention.

Broadly, embodiments, of the inventive concepts disclosed herein are directed to a method and a system, which may include a bed that allows a passenger to lie flat between two rows of passenger seats (e.g., a fore row of seats and an aft row of seats). The bed includes a mattress and a diaphragm that supports the mattress. Once put into place, the bed and the seat pan of the aft row of seats form a sleeping area that allows the passenger to lie flat. The height of the mattress is substantially the same as the height of the seat pan of the aft passenger seats so that the passenger can lie on both the mattress and the seat pan at the same time (e.g., with armrests raised). The mattress is inflatable and is connected to a fore passenger seat via a pouch that the mattress can fit into when uninflated. The diaphragm may also fit into the pouch. The diaphragm includes fore connectors and aft connectors (e.g., rings and/or hooks) that couple to fore couplers on the fore passenger seats and aft couplers on the aft passenger seats (e.g., hooks and/or rings). Once the diaphragm has been secured to the fore passenger seat and aft passenger seat, the mattress may be secured to the diaphragm and may be inflated. The passenger may be secured to the bed via seat belts, which may include a seat belt junction that can couple to multiple seat belts.

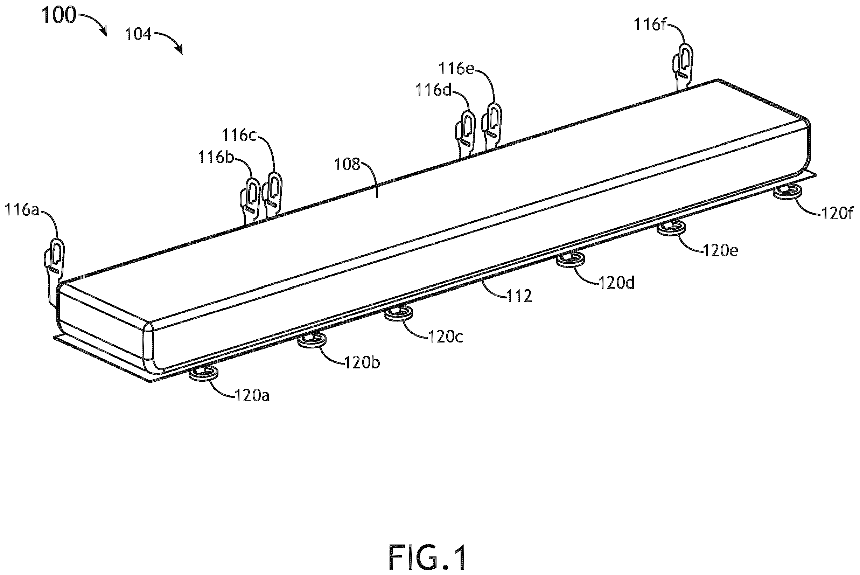

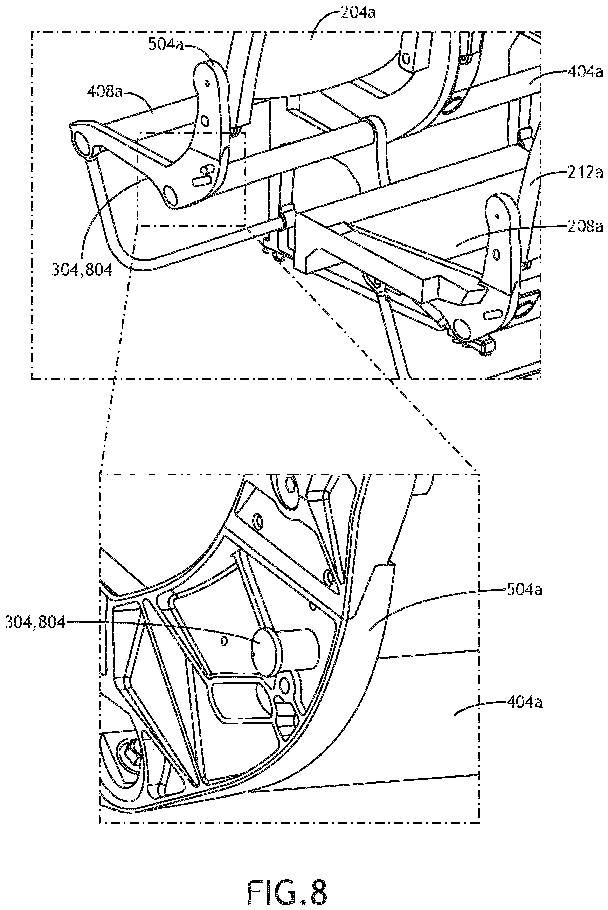

Referring now to FIGS. 1-15, embodiments, of a system 100 according to the concepts disclosed herein are depicted. The system 100 may be implemented within any environment, such as a vehicle (e.g., an aircraft, an automobile, a bus, a watercraft, a spacecraft, or a train). For example, the system may be implemented within a passenger aircraft.

In embodiments, the system 100 includes a bed 104, as shown in FIG. 1. The bed 104 includes a mattress 108 and a diagram 112 that supports the mattress 108. The bed 104 further includes one or more fore connectors 116a-f attached to the diaphragm 112 configured to attach to a row of fore passenger seats. The bed 104 further includes one or more aft connectors 120a-f attached to the diaphragm 112 configured to attach to a row of aft passenger seats. The fore connectors 116a-f and aft connectors 120a-f may include any type of coupling mechanism or component of a coupling mechanism including, but not limited to, a ring, a hook, a buckle, a latch, a seat belt component (e.g., a latch plate or buckle), or a clasp. In some embodiments, the mattress 108 and the diaphragm 112 are attached.

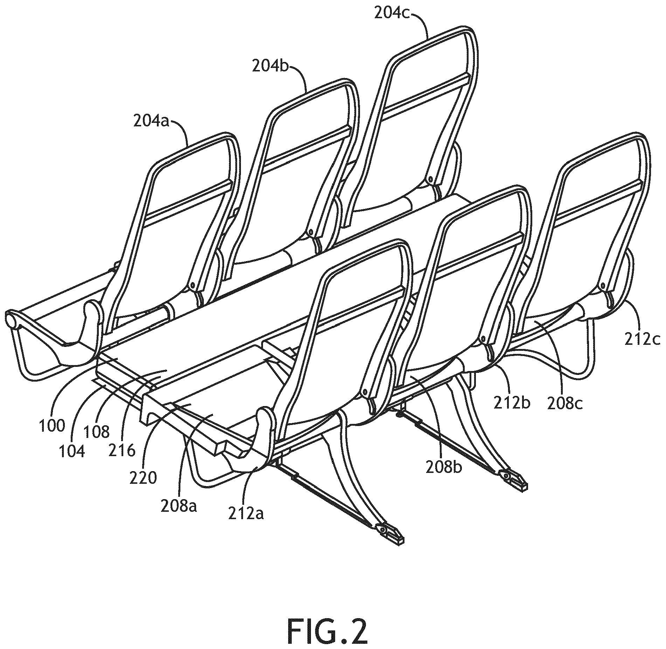

Referring to FIG. 2, when the bed 104 has been prepared, the bed 104 is configured to fit between the fore passenger seats 204a-c and the seat pans 208a-c of the aft passenger seats 212-a-c. When in use, a height of a top bed surface 216 is substantially the same height as a top seat pan surface 220 (e.g., so that a passenger may lie on both the bed and the seat pans 212a-c simultaneously). For example, the top seat pan surface 220 may be within 10 cm of the top bed surface. In another example, the seat pan surface 220 may be within 3 cm of the top bed surface.

The embodiments, the mattress 108 is an inflatable mattress 108. The inflatable mattress may be inflated by any means including, but not limited to, by mouth, by an internal inflation system (e.g., an integrated air pump, an internally pressurized canister, or a chemical or pyrotechnic process, such as those used in automotive airbags), or by an external inflation system, such as an air pump or a pressurized air canister. The mattress 108 may be made of any material including, but not limited to, polyurethane. When inflated, the mattress may have a thickness of approximately three inches (7.62 cm), of approximately four inches (10.16 cm), of approximately five inches (12.7 cm), of approximately six inches (15.24 cm), of approximately seven inches (17.78 cm), or of approximately eight inches (20.32 cm). For example, the mattress may have a thickness of four inches. (10.16 cm) In some embodiments, the mattress is an uninflatable cushion.

In embodiments, the diaphragm 112 may be made of any acceptable material, such as nylon, cotton, polyester, nitrile, or rubber. For example, the diaphragm may be constructed of material used to create a seat pan diaphragm. The diaphragm 112 may include reinforcement structures, such as rods, to strengthen the diaphragm.

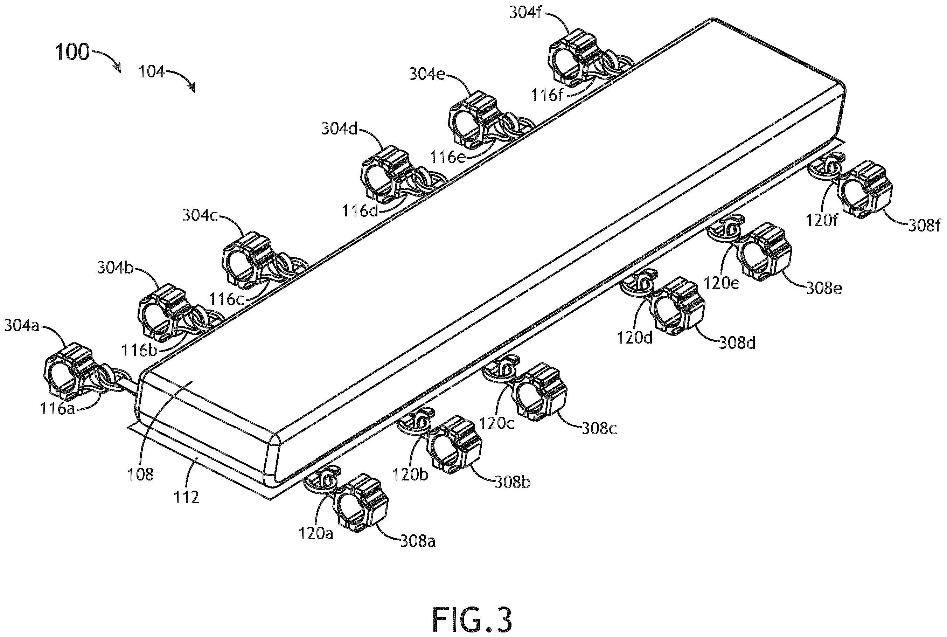

Referring to FIG. 3, the system 100 may further include fore couplers 304a-f configured to couple to the fore connectors 116a-f. The system 100 may further include aft couplers 308a-f configured to couple to the aft connectors 120a-f. The fore couplers 304a-f and aft couplers 308a-f may include any type of coupling mechanism or component of a coupling mechanism including, but not limited to, a ring, a hook, a buckle, a latch, a seat belt component (e.g., a latch plate or buckle), or a clasp.

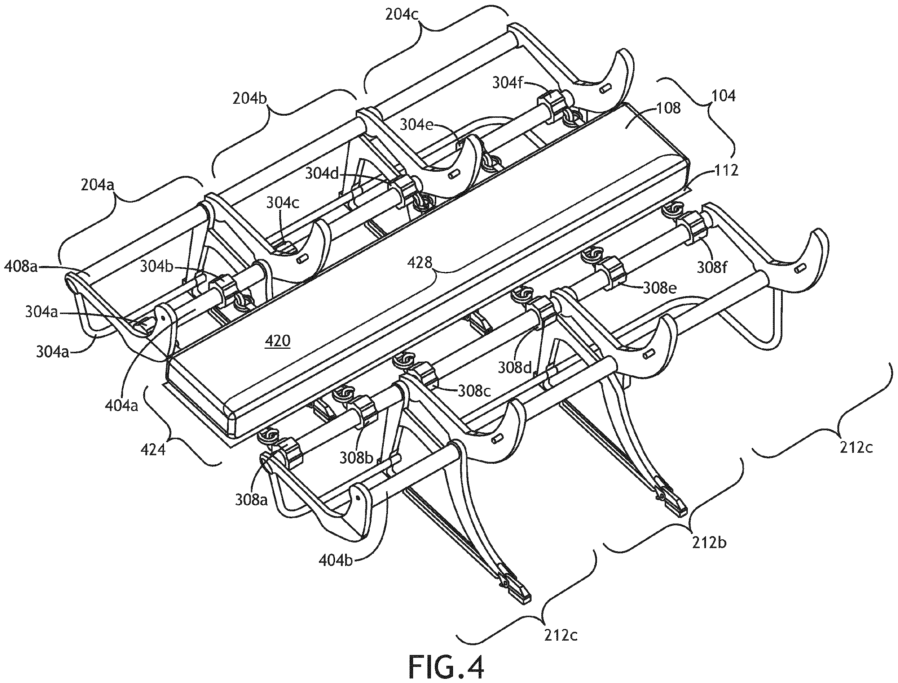

In embodiments, the fore couplers 304a-f are attached to the fore passenger seats 204a-c, and the aft couplers 308a-f are attached to the aft passenger seats 212a-c. as shown in FIG. 4 (e.g., showing the framework of the fore passenger seats 204a-c and the aft passenger seats 212a-c. The fore couplers 304a-f may be designed to couple to any part of the fore passenger seat 204a-c including, but not limited to, the rear cross bar 404a (e.g., as shown in FIG. 4), the front cross bar 408a, the spreader bars, or the seat leg assembly. The aft couplers 308a-f may be designed to couple to any part of the aft passenger seat 212a-c including, but not limited to, the front cross bar 408b (e.g., as shown in FIG. 4), the rear cross bar 404b, the spreader bars, or the seat leg assembly. In this manner, the fore passenger seats 204a-c and the aft passenger seats 212a-c support the mattress 108 and diaphragm 112.

The bed 104 extends along a bed space 420 created by a bed width 424 and a bed length 428. For example, the bed width is substantially the distance between the row of fore passenger seats 204a-c and the seat pans 208a-c of the aft passenger seats 212a-c (e.g., filling the "leg room" space between the fore passenger seats 204a-c and the aft passenger seats 212a-c. The bed 104 may extend along any number of seats in an aircraft. For example, the bed 104 may extend along a single seat (e.g., a small seat for small children). In another example, the bed may extend along two seats. In another example, the bed may extend along three seats (e.g., as shown in FIG. 2). In another example, the bed may extend along four seats.

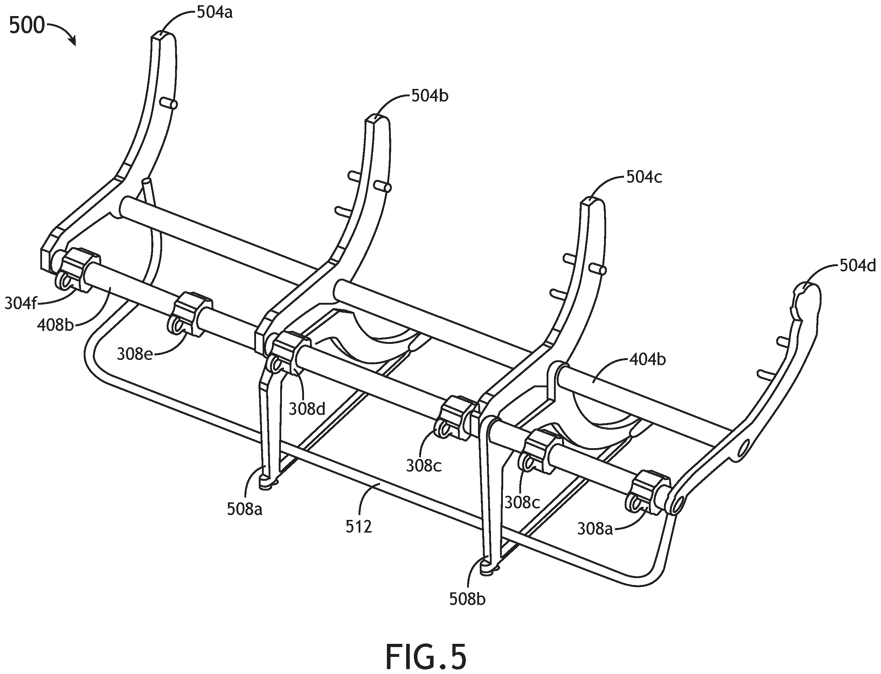

Referring to FIG. 5, the frame 500 of the aft passenger seats 212a-c is shown. The frame 500 includes the front cross bar 408b (shown bound to the aft couplers 308a-f, the rear cross bar 404b, spreader bars 504a-d, seat leg assembly 508a-b, and a baggage bar 512. We note that the frame 500 of the fore passenger seats 204a-c in FIG. 5 may be similar to the frame 500 of the aft passenger seats, having fore couplers 304a-f instead of aft couplers 308a-f.

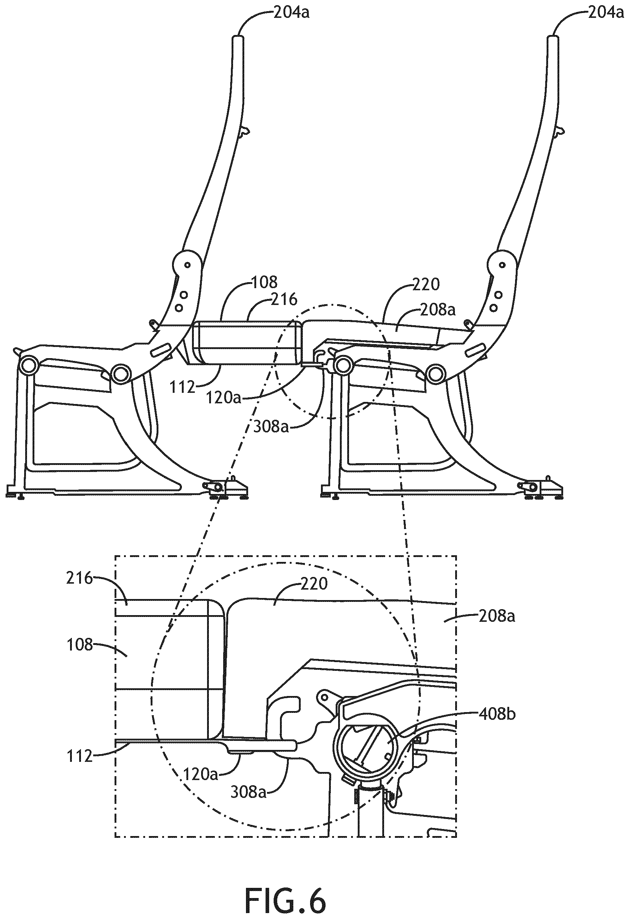

Referring to FIG. 6, the diaphragm is shown coupled to the aft passenger seat 212a via the coupling of the aft connector (e.g., a ring) to the aft coupler 308a (e.g., a hook) which is attached to the front cross bar 408b). The mattress 108, laying on top of, or stitched to, the diaphragm 112 has a bed surface 216 that is substantially the same height as the top seat pan surface 220.

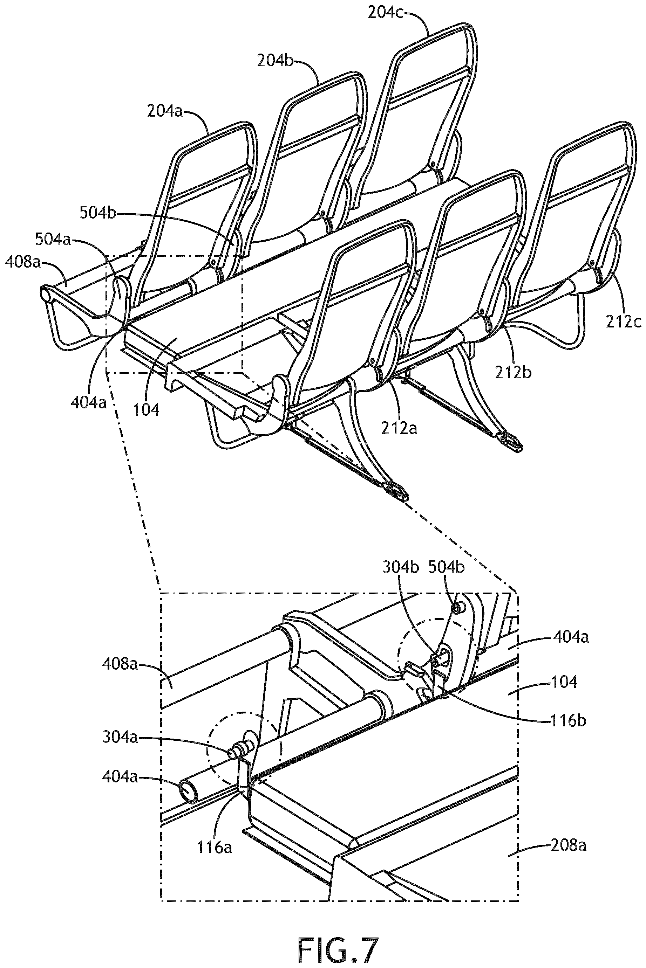

Referring to FIG. 7, the bed 104 is shown being attached to the fore passenger seats 204a-c via fore connectors 116a-b configured as hooks that couple to fore couplers 304a-b (e.g., configured as bushings) that are attached to the spreader arms 504b. In some embodiments, the fore coupler 304 or the aft coupler 308 may be a structure that had been permanently affixed to fore passenger seat 204 or aft passenger seat 212. For example, the fore coupler 304 may be configured as a head 804 (e.g., a mushroom head) that is couplable to the fore connector 116a, as shown in FIG. 7. Heads 804 are a convenient and easy way for engaging and dis-engaging a hook (e.g., of the fore connectors 116, which can also help in creating a flat bed surface parallel to the floor.

In some embodiments, an adaptor, such as a clamp, may be used to both connect to a bushing or other fore coupler 304 or aft coupler 308 and to connect to the respective fore connector 116 or aft connector 120. For example, the adaptor may make use of an existing bushing or other connectable structure that could connect to the respective fore connector 116 or aft connector 120, but not enable the bed to be set at the correct height or levelness. The adaptor may also provide easier access for the coupling with the fore connector 116 or aft connector 120, as the bushing may be placed in a position that is difficult for manual coupling.

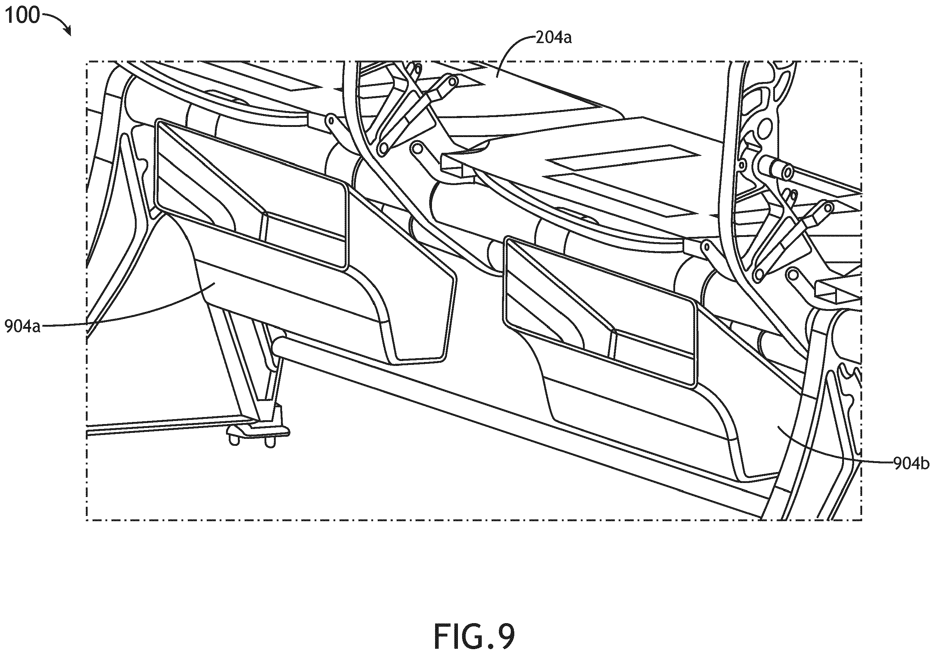

In some embodiments, the system 100 includes a pouch 904a-b that stores at least one of the mattress 108 (e.g., an uninflated mattress) and the diaphragm 112, as shown in FIG. 9. The pouch may be stored in or affixed to the fore passenger seat 204 or aft passenger seat 212. For example, the mattress 108 and diaphragm 112 may both be stored in the pouch 904a-b. The pouch 904a-b may be stored or affixed to the frame 500, such as to the front cross bar 408 and/or rear cross bar 404 (e.g., such as the typical placing of a life vest pouch). When placed under the seat pan of the fore passenger seat 204, the pouch 904a-b may be aft-facing so that the mattress 108 and diaphragm 112 may be quickly pulled out and deployed. In embodiments, the bed 104 is attached to the pouch 904a-b, such as via a portion of the diaphragm 112, so that the bed 104 will avoid being displaced from the pouch 904a-b. the pouch 904 may further store an external inflation system.

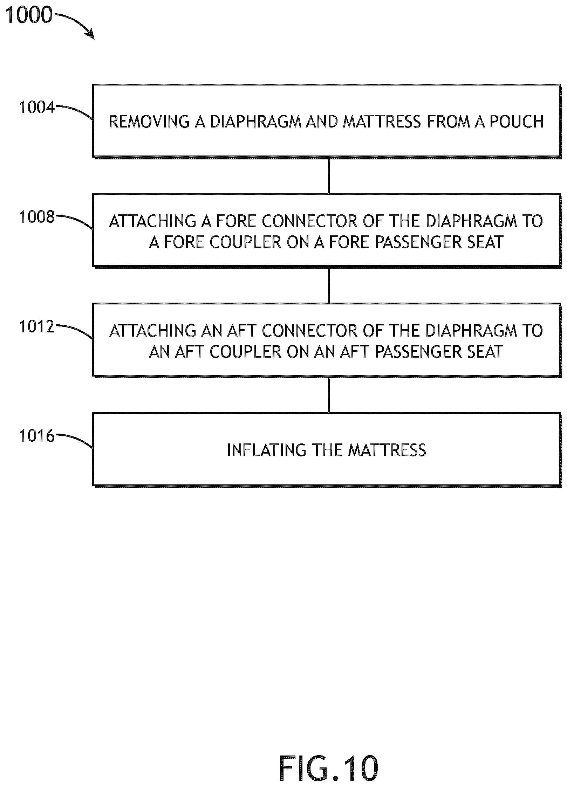

A method 1000 for preparing the bed 104 of the system 100 in a vehicle such as an aircraft is shown in FIG. 10. In embodiments, the method 1000 includes a step 1004 of removing the diaphragm 112 and the mattress 108 from the mattress from the pouch 904. In embodiments, the method 1000 includes a step 1008 of attaching a fore connector 116 of the diaphragm 112 to a fore coupler 304 on the fore passenger seat 204. In embodiments, the method 1000 further includes a step 1012 of attaching an aft connector 120 of the diaphragm to an aft coupler 308 of the aft passenger seat 212. In embodiments, the method 1000 includes a step 1016 of inflating the mattress 108(e.g., via an internal inflation system or external inflation system). In embodiments, the method 1000 further includes placing the mattress 108 on the diaphragm 112.

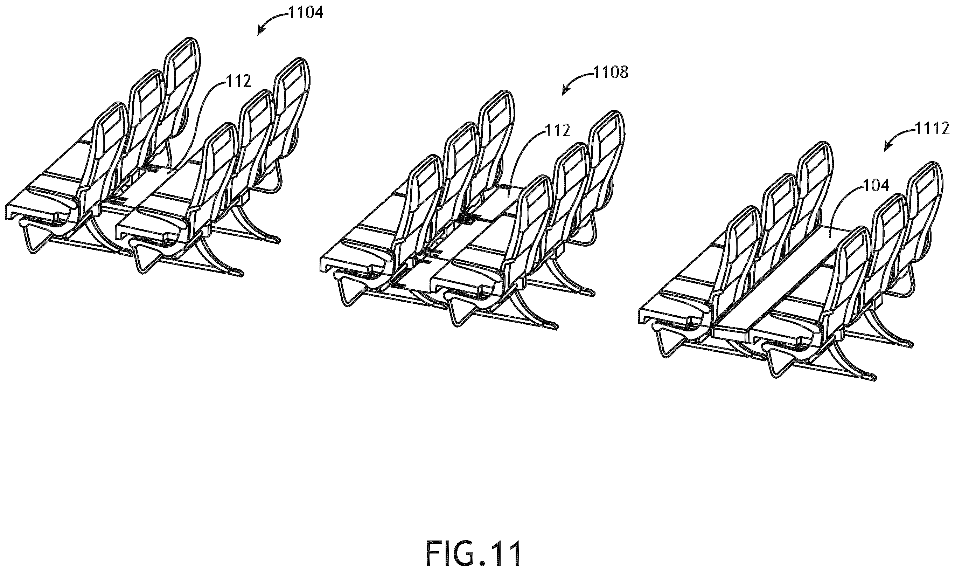

In embodiments, the method 1000 includes a step of unfolding the mattress 108, as illustrated in the sequence of steps shown in FIG. 11. This sequence illustrates a system 100 for placing a bed 104 across three seats. However, the system 100 may be modified for any number of seats. In a first step 1104, the diaphragm 112 is pulled out of the pouch, and is partially unfolded. In a second step 1108, the diaphragm is unfolded completely, allowing the fore connectors 116 to be positioned near fore couplers 304, and the aft connectors 120 to be positioned near the aft couplers 308. In a third step 1112, the mattress 108 is fully coupled to the fore passenger seats 204 and the aft passenger seats 212 and inflated. For example, the aft connectors 120 (e.g., rings) on the diaphragm 112 will be inserted into the aft couplers 308 (e.g., hooks) on aft seat 212. Fore connectors 116 (e.g., hooks with adjustable straps) will be inserted into the fore couplers 304 of the fore passenger seat 204 and adjusted to remove slack. Air can then be pumped into the mattress 108. The mattress 108 may be secured to the diaphragm 112 by either the weight of the mattress 108, by stitching the mattress 108 to the diaphragm 112, or by attachment means including but not limited to straps or hook-and-loop fastener (e.g., Velcro^{tm}).

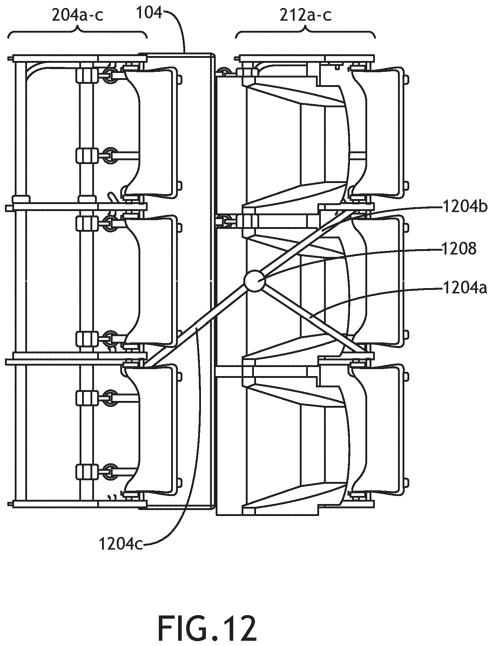

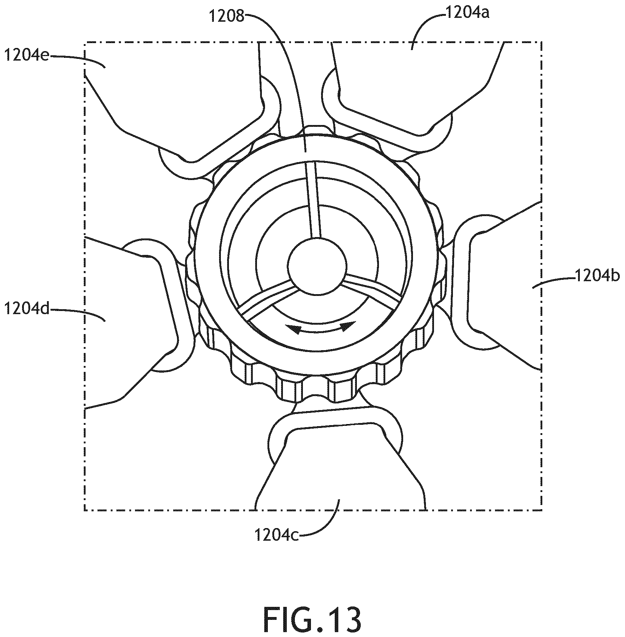

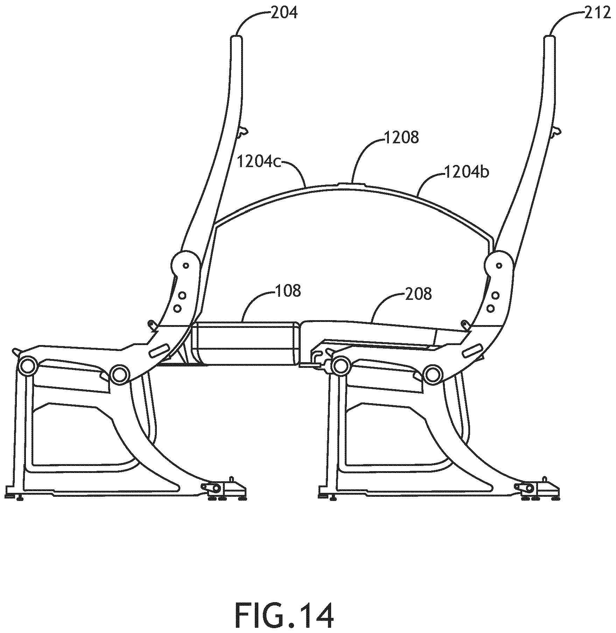

In embodiments, the system 100 secures a passenger to the bed 104 via seat belts 1204a-b, as shown in FIG. 12. For example, one or more seat belts 1204a-b of the aft passenger seats 212a-c can be coupled together at one or more seat belt junctions 1208 to create a simple restraining web. One or more of the seat belts 1204c from the fore passenger seats 204a-c, or a standalone strap may also be used in forming the restraining web. An example of a seat belt junction 1208 is shown in FIG. 13 (e.g., from a five-strap harness). The seat belt junction 1208 may be configured to any number of seat belts 1204, such as three seat belts 1204 a-c, as shown in FIG. 12. A side view of the seat belts 1204b-c and seat belt junction 1208 forming a restraining web over the mattress 108 and seat pan 208 is shown in FIG. 14.

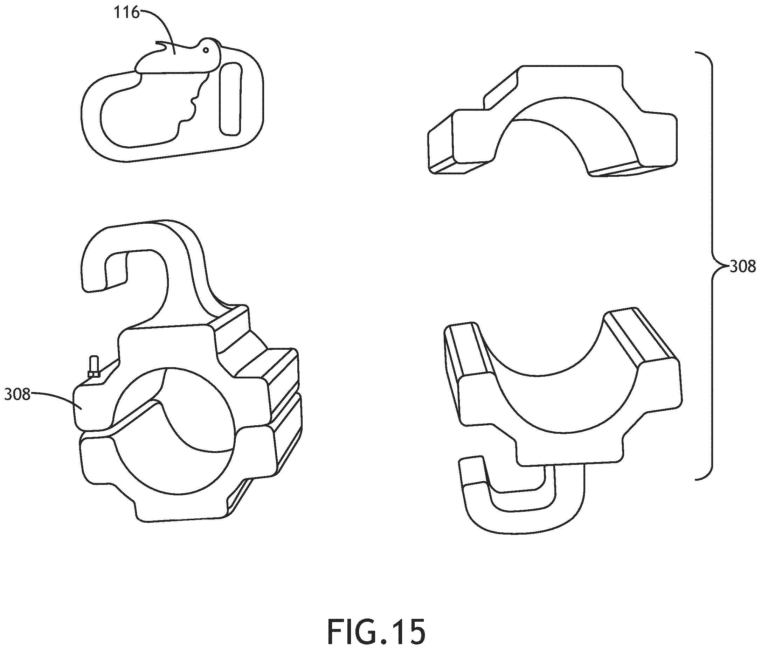

An example of an aft coupler 308 (in both assembled and unassembled forms), and a fore connector 116 are shown in FIG. 15. The aft couplers 308, fore connectors 116, fore couplers 304, and aft connectors 120 may be made of any type of material including metal, and plastic. In some cases where a front cross bar 408 or rear cross bar 404 is used to attach to the fore couplers 304 or aft couplers 308, anti-slipping material, such as rubber, may be inserted between the bar and couplers. The fore passenger seat 204 and aft passenger seat 212 may include any number of aft couplers 308, fore connectors 116, fore couplers 304, and aft connectors 120 per seat (e.g., one, two, or three per seat). Any of the aft couplers 308, fore connectors 116, fore couplers 304, and aft connectors 120 may include a strap, such as an adjustable strap.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system comprising:
a bed (104) configured to support a passenger between a fore passenger seat (204) and an aft passenger seat (212) comprising:
a diaphragm (112) comprising:
a fore connector (116) configured to couple to a fore coupler (304) of the fore passenger seat (204); and
an aft connector (120) configured to couple to an aft coupler (308) of the aft passenger seat (212); and
a mattress (108) coupled to the diaphragm.

2. The system of claim 1, further comprising a seat belt junction (1208) configured to couple to two or more seat belts (1204) and configured to secure the passenger to the bed.

3. The system of claim 2, further comprising a seat belt (1204) configured to couple to the seat belt junction and the fore passenger seat.

4. The system of any preceding claim, wherein the mattress (108) is an air mattress; and optionally further comprising a pouch (904) configured to store the air mattress when the air mattress is uninflated, and optionally wherein the pouch is coupled to the fore passenger seat or the aft passenger seat, wherein at least one of the diaphragm or mattress is coupled to the pouch.

5. The system of any preceding claim, wherein the aft connector (120) comprises a ring, wherein the aft coupler (308) comprises a hook; and/or
wherein the fore connector (116) comprises a ring, wherein the fore coupler (304) comprises a hook; or
wherein the fore connector (116) comprises a hook and/or wherein the aft connector (120) comprises a hook.

6. The system of any preceding claim, further comprising the fore coupler (304) and the aft coupler (308).

7. The system of any preceding claim, wherein the fore coupler is configured to attach to a spreader (504).

8. The system of any preceding claim, wherein a bed (104) extends across a bed space (420) between a row of at least three fore passenger seats and at least a row of seat pans of at least three aft passenger seats.

9. The system of any preceding claim, wherein a top side of the mattress is substantially a same height as a top side of a seat pan of the aft passenger seat.

10. The system of any preceding claim, further comprising an inflation device.

11. The system of any preceding claim, wherein at least one of the fore connector or the aft connector further comprises an adjustable strap.

12. The system of any preceding claim, further comprising the aft passenger seat (212) and the fore passenger seat (204).

13. The system of any preceding claim, further comprising a hook-and-loop fastener configured to couple the diaphragm to the mattress.

14. A method for preparing a bed in an aircraft comprising:
removing a diaphragm (112) and mattress (108) from a pouch (904);
attaching a fore connector (116) of the diaphragm to a fore coupler (304) on a fore passenger seat (204);
attaching an aft connector (120) of the diaphragm to an aft coupler (308) on an aft passenger sea (212)t; and
inflating the mattress.

15. The method of claim 14, further comprising, before the step of inflating the mattress, unfolding the mattress.
